# FASCICULE DE BREVET EUROPEEN

(11) **EP 1 612 077 B1**
(45) Date de publication et mention de la délivrance du brevet: **24.01.2007**
(21) Numéro de dépôt: 05291236.7
(22) Date de dépôt: 08.06.2005
(51) Int. Cl.: B60J 7/20

(54) **Dispositif de protection d'objets disposés dans le coffre arrière d'un véhicule automobile à toit rétractable**
Einrichtung zum Schutz von Gegenständen im Kofferraum eines Fahrzeuges mit einklappbaren Dach
Protection device for objects in the boot of a vehicle with retractable toit

(30) Priorité: 02.07.2004 FR 0451428
(43) Date de publication de la demande: 04.01.2006
(73) Titulaire: Heuliez, 79140 Cerizay (FR)
(72) Inventeur: Queveau, Gérard, 79140 Le Pin (FR); Queveau, Paul, 79140 Montravers (FR); Guillez, Jean-Marc, 79140 Cirieres (FR)
(74) Mandataire: Breese Derambure Majerowicz

(56) Documents cités:
- EP-A- 1 022 175
- EP-A- 1 228 914
- WO-A-20/04009386
- DE-A1- 10 131 599
- DE-A1- 10 131 886
- DE-U1- 20 012 866
- FR-A- 2 796 901

## Description

L'invention concerne un dispositif de protection d'objets disposés dans le coffre arrière d'un véhicule automobile, ledit véhicule possédant un toit rétractable mobile entre une position déployée dans laquelle il recouvre l'habitacle du véhicule, et une position pliée dans laquelle il est rangé dans le coffre fermé par un capot.

Dans de tels véhicules, il est utile de prévoir un dispositif de protection d'objets disposés dans le coffre, ce dispositif permettant d'éviter un éventuel endommagement desdits objets lors du pliage du toit ou de la fermeture du coffre.

Par ailleurs, dans certains véhicules de ce type, possédant un toit rétractable, les mouvements de fermeture et d'ouverture du capot du coffre arrière sont entièrement automatisés. En particulier, le capot du coffre arrière peut être articulé de façon à pouvoir être ouvert aussi bien de l'avant vers l'arrière, pour permettre le rangement du toit, que de l'arrière vers l'avant, pour permettre le rangement d'objets à l'intérieur dudit coffre.

On connaît déjà, du document FR 2 842 481, un dispositif de protection agencé pour permettre la protection des bagages quelque soit le mouvement de fermeture du capot du coffre.

Toutefois, un tel dispositif ne permet pas d'éviter l'endommagement des éléments formant le toit, ou éventuellement d'autre éléments tels qu'un système de tablette arrière disposé dans le capot du coffre, lorsque le capot de coffre est automatiquement mis en mouvement.

Pour remédier à cet inconvénient, l'invention propose un dispositif de protection d'objets disposés dans le coffre arrière d'un véhicule, permettant non seulement d'assurer une protection efficace des objets disposés dans le coffre, mais également de garantir que notamment les éléments de toit ne seront pas endommagés lors de leur rangement dans le coffre, et ce lors du mouvement automatisé du capot de coffre.

A cet effet, l'invention propose un dispositif de protection d'objets disposés dans le coffre arrière d'un véhicule automobile, ledit véhicule possédant un toit rétractable mobile entre une position déployée dans laquelle il recouvre l'habitacle du véhicule, et une position pliée dans laquelle il est rangé dans le coffre fermé par un capot, ledit dispositif comprenant :
- un panneau déplaçable entre une position abaissée, dans laquelle il délimite une surface supérieure du volume disponible pour des objets disposés au fond dudit coffre arrière, et dans laquelle le toit peut être rangé, et une position élevée dans laquelle il dégage la plus grande partie du volume intérieur dudit coffre arrière, le toit étant en position déployée ;
- au moins un capteur agencé pour détecter la position dudit panneau ;
ledit dispositif comprenant des verrous libérables pour verrouiller le capot par rapport au coffre, et une unité de commande de la libération desdits verrous, ladite unité étant agencée pour libérer les verrous lorsqu'une commande de mouvement du toit ou du capot du coffre est activée, et lorsque la position du panneau détectée par le capteur est compatible avec le mouvement demandé, de sorte à permettre l'ouverture dudit capot sélectivement de l'avant vers l'arrière ou de l'arrière vers l'avant du véhicule.

Ainsi, un tel dispositif garantit que le capot du coffre arrière ne puisse être ouvert automatiquement que lorsque les positions respectives des différents éléments - panneau, toit - sont compatibles entre elles.

Si ce n'est pas le cas, tout mouvement automatisé du capot du coffre est interdit.

Selon une réalisation, le panneau comprend au moins deux éléments articulés l'un par rapport à l'autre autour d'un axe transversal, ledit axe étant sensiblement perpendiculaire à l'axe longitudinal du véhicule, lesdits éléments étant mobiles entre une première position dans laquelle ils sont alignés, de sorte à permettre à la fois le rangement du toit et le rangement d'objets dans le coffre, et une deuxième position dans laquelle lesdits éléments forment un angle l'un par rapport à l'autre, de sorte à permettre le rangement d'objets dans le coffre à l'intérieur d'un volume maximal, le toit étant en position déployée.

Cet agencement permet d'optimiser le volume de rangement d'objets à l'intérieur du coffre, lorsque le toit est en position déployée.

Egalement, l'unité de commande peut être agencée pour déclencher un mouvement totalement automatisé du capot du coffre.

Et, en particulier, l'unité de commande peut avantageusement être agencée pour déclencher, de façon synchronisée et automatisée, l'ouverture, respectivement la fermeture du toit, et l'ouverture, respectivement la fermeture du capot du coffre.

D'autres objets et avantages de l'invention apparaîtront au cours de la description qui suit, faite en référence aux dessins annexés dans lesquels :
- la figure1 est une vue schématique de côté du coffre arrière d'un véhicule automobile, montrant le capot du coffre en position ouverte, et le panneau en position élevée, le toit étant en position déployée ;
- la figure 2 est une vue similaire à celle de la figure 1, montrant le capot du coffre en position fermée, le panneau étant en position élevée ;
- la figure 3 est une vue similaire à celles des figures précédentes, dans laquelle le capot du coffre est en position ouverte, et le panneau en position abaissée ;
- la figure 4 est une vue similaire à celles des figures précédentes, dans laquelle le capot du coffre est en position fermée, et le panneau en position abaissée.

Comme montré aux dessins, le véhicule équipé d'un dispositif de protection d'objets selon l'invention comprend un capot 1 de coffre arrière 2. Selon la réalisation représentée, ce capot 1 comprend un dispositif de guidage d'une tablette arrière 3, comprenant un système de glissières 4, qui permet de ranger la tablette arrière 3 sous le capot 1 de coffre lorsque le toit (non représenté) est déployé, et de déployer la tablette arrière 3 vers l'avant du véhicule, et dans le prolongement du capot 1 de coffre, lorsque le toit est rangé dans le coffre 2.

Le capot 1 comprend deux leviers 5 situés en partie avant, et articulés sur un support libérable 6, ainsi que deux verrous libérables 7, 8 situés respectivement à l'avant et à l'arrière dudit capot 1. Le verrou libérable 7 situé à l'avant est destiné à permettre l'ouverture du capot 1 de l'avant vers l'arrière, lorsque le toit doit être rangé dans le coffre 2, et le verrou libérable arrière 8 est destiné à permettre l'ouverture du capot de l'arrière vers l'avant, lorsque des objets tels que des bagages doivent être rangés dans le coffre 2.

Le panneau 9 du dispositif comprend deux éléments 10a, 10b articulés autour d'un axe transversal 11 sensiblement perpendiculaire à l'axe longitudinal du véhicule, la direction longitudinale du véhicule étant définie comme étant la direction avant (AV) -arrière (AR). L'élément avant 10a du panneau est lui-même articulé autour d'un axe 12 situé dans le coffre 2.

Deux capteurs de position 13a, 13b dudit panneau 9 sont prévus respectivement sur l'élément avant 10a et sur l'élément arrière 10b dudit panneau.

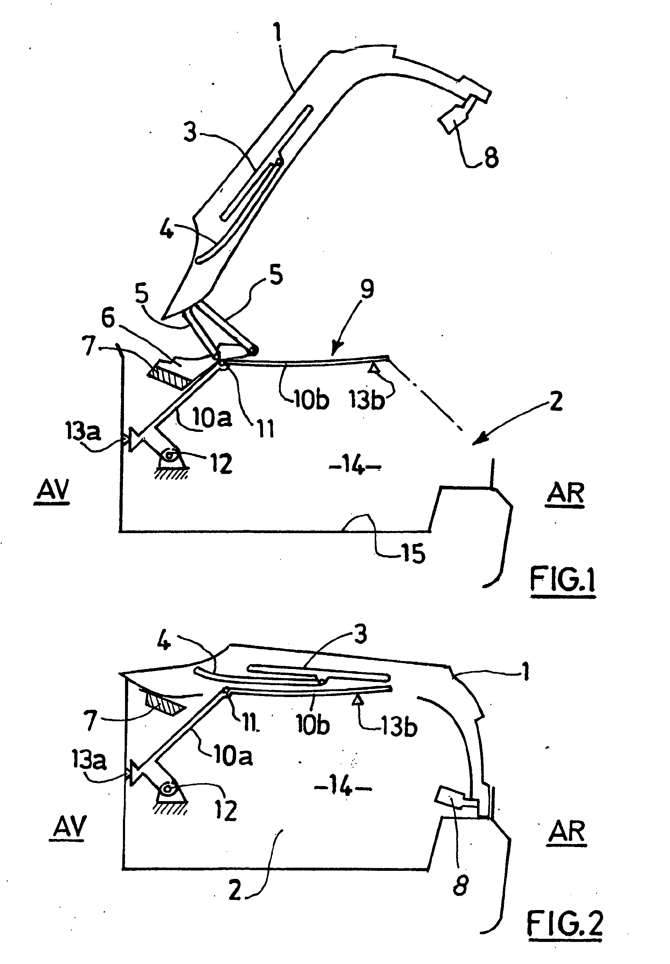

On décrit à présent le fonctionnement d'un tel dispositif, en relation avec les figures 1 à 4.

Tel que représenté sur la figure 1, le capot 1 du coffre est en position ouverte, le toit (non représenté) étant en position déployée. Sur cette figure, les deux éléments 10a, 10b du panneau 9 forment un angle l'un par rapport à l'autre, de sorte qu'il est possible de ranger des objets dans la partie 14 du coffre située sous le panneau, et ce en utilisant un volume maximal. Dans cette position, si la commande de fermeture du capot 1 de coffre est activée, la position du panneau 9 détectée par les capteurs 13a, 13b est telle que ce mouvement de fermeture sera autorisé, et pourra être réalisé de façon automatisée, c'est-à-dire sans aucune intervention manuelle de l'utilisateur du véhicule. A cet effet, on peut d'ailleurs prévoir un dispositif mécanique, hydraulique ou électrique permettant l'automatisation du mouvement du capot.

On passe alors dans la configuration représentée sur la figure 2, dans laquelle le capot 1 du coffre est en position fermée. Dans cette position, l'élément avant 10a du panneau 9 est incliné, et l'élément arrière 10b suit le contour interne du capot 1 de coffre, sans pour autant être en contact avec le système de tablette 3, ce qui lui permet de protéger ledit système de tablette.

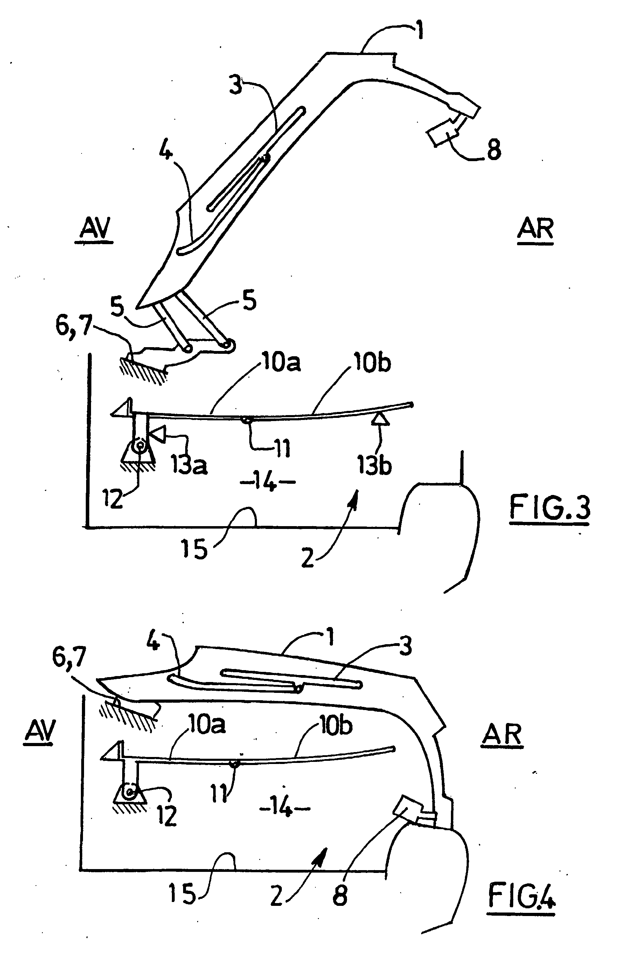

Tel que représenté sur la figure 3, le capot 1 du coffre est ouvert de sorte à permettre l'accès aux objets éventuellement situés dans le coffre. Sur cette figure, les éléments 10a, 10b du panneau 9 sont alignés l'un avec l'autre, cette position permettant la protection des éléments de toit, lorsque ceux-ci sont rangés à l'intérieur du coffre, entre le capot 1 du coffre et la surface supérieure du panneau 9, et la protection des bagages disposés entre le fond 15 du coffre et la surface inférieure du panneau 9.

Ainsi, dans cette position, si la commande de fermeture du capot de coffre est activée, la position du panneau 9 détectée par les capteurs 13a, 13b est telle que ce mouvement de fermeture sera autorisé, et pourra être réalisé de façon entièrement automatisée. Le capot 1 passe alors dans sa configuration représentée sur la figure 4. En outre, dans cette position du panneau 9, la commande est agencée pour déclencher également, de façon synchronisée et entièrement automatisée, le rangement du toit à l'intérieur du coffre 2, ainsi que la sortie de la tablette 3.

## Revendications

1. Dispositif de protection d'objets disposés dans le coffre arrière (2) d'un véhicule automobile, ledit véhicule possédant un toit rétractable mobile entre une position déployée dans laquelle il recouvre l'habitacle du véhicule, et une position pliée dans laquelle il est rangé dans le coffre (2) fermé par un capot (1), ledit dispositif comprenant :
- un panneau (9) déplaçable entre une position abaissée, dans laquelle il délimite une surface supérieure du volume disponible pour des objets disposés au fond dudit coffre arrière, et dans laquelle le toit peut être rangé, et une position élevée dans laquelle il dégage la plus grande partie du volume intérieur dudit coffre arrière, le toit étant en position déployée ;
- au moins un capteur (13a, 13b) agencé pour détecter la position dudit panneau(9);
ledit dispositif étant **caractérisé en ce qu'**il comprend des verrous libérables (7, 8) pour verrouiller le capot (1) par rapport au coffre (2), et une unité de commande de la libération desdits verrous (7, 8), ladite unité étant agencée pour libérer les verrous (7, 8) lorsqu'une commande de mouvement du toit ou du capot (1) du coffre est activée, et lorsque la position du panneau (9) détectée par le au moins un capteur (13a, 13b) est compatible avec le mouvement demandé, de sorte à permettre l'ouverture dudit capot (1) sélectivement de l'avant vers l'arrière ou de l'arrière vers l'avant du véhicule.

2. Dispositif selon la revendication 1, **caractérisé en ce que** ledit panneau (9) comprend au moins deux éléments (10a, 10b) articulés l'un par rapport à l'autre autour d'un axe transversal (11), ledit axe étant sensiblement perpendiculaire à l'axe longitudinal du véhicule, lesdits éléments (10a, 10b) étant mobiles entre une première position dans laquelle ils sont alignés, de sorte à permettre à la fois le rangement du toit et le rangement d'objets dans le coffre (2), et une deuxième position dans laquelle lesdits éléments (10a, 10b) forment un angle l'un par rapport à l'autre, de sorte à permettre le rangement d'objets dans le coffre (2) à l'intérieur d'un volume maximal, le toit étant en position déployée.

3. Dispositif selon la revendication 1 ou 2, **caractérisé en ce que** l'unité de commande est agencée pour déclencher un mouvement totalement automatisé du capot (1) du coffre.

4. Dispositif selon la revendication 3, **caractérisé en ce que** l'unité de commande est agencée pour déclencher, de façon synchronisée et automatisée, l'ouverture, respectivement la fermeture du toit, et l'ouverture, respectivement la fermeture du capot du coffre.

## Claims

1. Device for protecting objects arranged in the rear trunk (2) of a motor vehicle, said vehicle having a retractable roof that is mobile between an extended position in which it covers the passenger compartment of the vehicle and a folded position in which it is stored in the trunk (2) closed by a lid (1), said device comprising:
- a panel (9) that can move between a lowered position, in which it delimits a top surface of the volume available for objects arranged in the bottom of said rear trunk, and in which the roof can be stored, and a raised position in which it frees up the largest amount possible of the inside volume of said rear trunk, the roof being in extended position;
- at least one sensor (13a, 13b) arranged such as to detect the position of said panel (9);
said device being **characterised in that** it comprises releasable bolts (7, 8) for locking the lid (1) to the trunk (2), and a unit that controls the release of said bolts (7, 8), said unit being arranged such as to release the bolts (7, 8) when a command to move the roof or the lid (1) of the trunk is given, and when the position of the panel (9) detected by the at least one sensor (13a, 13b) is compatible with the requested movement, such as to allow the opening of said lid (1) selectively from front to back or from back to front of the vehicle.

2. Device according to claim 1, **characterised in that** said panel (9) comprises at least two elements (10a, 10b) articulated in relation to each other about a transverse axis (11), said axis being substantially perpendicular to the longitudinal axis of the vehicle, said elements (10a, 10b) being mobile between a first position in which they are aligned, such as to allow both the storage of the roof and the storage of objects in the trunk (2), and a second position in which said elements (10a, 10b) form an angle in relation to each other, such as to allow the storage of objects in the trunk (2) inside a maximum volume, the roof being in extended position.

3. Device according to claim 1 or 2, **characterised in that** the control unit is arranged to trigger a completely automatic movement of the lid (1) of the trunk.

4. Device according to claim 3, **characterised in that** the control unit is arranged to trigger, in a synchronised and automatic manner, the opening and respective closing of the roof and the opening and respective closing of the lid of the trunk.

## Patentansprüche

1. Vorrichtung zum Schutz von im rückwärtigen Kofferraum (2) eines Automobils untergebrachten Objekten, wobei das besagte Fahrzeug ein einziehbares Dach besitzt, das beweglich ist zwischen einer ausgebreiteten Position, in der es den Fahrgastraum des Fahrzeugs überdeckt, und einer zusammengeklappten Position, in der es im Kofferraum (2) verstaut ist, der mit einem Kofferraumdeckel (1) verschlossen ist, wobei die besagte Vorrichtung umfaßt:
- eine Platte (9), verschiebbar zwischen einer abgesenkten Position, in der sie eine obere Fläche des für die am Boden des besagten rückwärtigen Kofferraums untergebrachten Objekte verfügbaren Volumens abgrenzt, und in der das Dach verstaut werden kann, und eine gehobene Position, in der sie den größten Teil des Innenvolumens des besagten rückwärtigen Kofferraums freigibt, wobei das Dach in ausgebreiteter Position ist;
- mindestens einen Fühler (13a, 13b), der so gestaltet ist, daß er die Position der besagten Platte (9) entdeckt;
Wobei die besagte Vorrichtung **dadurch gekennzeichnet ist, daß** sie freigebbare Riegel (7, 8) zum Verriegeln des Kofferraumdeckels (1) gegenüber dem Kofferraum (2) umfaßt und eine Betätigungseinheit für die Freigabe der besagten Riegel (7, 8), wobei die besagte Einheit so gestaltet ist, daß sie die Riegel (7, 8) freigibt, wenn eine Bewegungssteuerung des Daches oder des Kofferraumdeckels (1) aktiviert wird, und wenn die von dem mindestens einen Fühler (13a, 13b) entdeckte Position der Platte (9) mit der geforderten Bewegung verträglich ist, so daß die Öffnung des besagten Deckels (1) nach Wahl von vorne nach hinten oder von hinten nach vorne des Fahrzeugs erlaubt wird.

2. Vorrichtung nach Anspruch 1, **dadurch gekennzeichnet, daß** die besagte Platte (9) mindestens zwei gegenseitig um eine Querachse (11) gelenkige Elemente (10a, 10b) umfaßt, wobei die besagte Achse deutlich senkrecht zur Längsachse des Fahrzeugs gelagert ist, wobei die besagten Elemente (10a, 10b) beweglich sind zwischen einer ersten Position, in der sie ausgefluchtet sind, so daß sie sowohl die Unterbringung des Daches, als auch die Unterbringung von Objekten im Kofferraum (2) erlauben, und einer zweiten Position, in der die besagten Elemente (10a, 10b) einen Winkel im Verhältnis zueinander bilden, so daß die Unterbringung von Objekten im Kofferraum (2) innerhalb eines maximalen Volumens möglich ist, wobei das Dach in ausgebreiteter Position ist.

3. Vorrichtung nach Anspruch 1 oder 2, **dadurch gekennzeichnet, daß** die Betätigungseinheit so vorgesehen ist, daß sie eine vollkommen automatische Bewegung des Kofferraumsdeckels (1) auslöst.

4. Vorrichtung nach Anspruch 3, **dadurch gekennzeichnet, daß** die Betätigungseinheit so vorgesehen ist, daß sie das Öffnen, beziehungsweise das Schließen des Daches und das Öffnen beziehungsweise das Schließen des Kofferraumsdeckels synchron und automatisch auslöst.
